# EUROPEAN PATENT APPLICATION

(11) **EP 1 016 691 A1**
(43) Date of publication of application: **05.07.2000**
(21) Application number: 99125338.6
(22) Date of filing: 20.12.1999
(51) Int. Cl.: C08L 23/22

(54) **Curing of butyl rubber with a phenolic resin**

(30) Priority: 31.12.1998 CA 2257707; 13.01.1999 CA 2258472
(71) Applicant: Bayer Inc., Sarnia, ON N7T 7M2 (CA)
(72) Inventor: Hopkins, William, Sarnia, Ontario, Canada N7S 6G2 (CA); von Hellens, Carl Walter, Bright's Grove, Ontario, Canada NON 1CO (CA)
(74) Representative: Feldhues, Michael L.F., Dr.

(57) **Abstract**

Butyl rubber formulations cured with polycyclic phenol-formaldehyde resins having dimethylene ether bridges and methylene bridges, wherein the molar ratio of dimethylene ether bridges to methylene bridges is less than about 2.5:1, display improved heat ageing characteristics.

## Description

### Field of the Invention

This invention relates to curing of butyl rubber.

### Background of the Invention

Butyl rubber is produced commercially by copolymerizing isobutylene with small amounts of isoprene. Butyl rubber in the uncured state is a weak material having the typical properties of a plastic gum; it has no definite elastic limit, that is, upon slow application of tensile stress, it elongates almost indefinitely without breaking, and exhibits virtually no elastic recovery after the stress is removed. On the other hand, vulcanized or cured butyl rubber is a strong, non-plastic material; it has an elastic limit, as well as the ability to return substantially to its original length after being stretched as much as several hundred per cent.

Butyl rubber is typically cross-linked or vulcanized by one of three basic methods. These are (1) accelerated sulfur vulcanization, (2) cross-linking with dioxime and related dinitroso compounds, and (3) a phenol-formaldehyde (resol) resin cure. This invention is concerned with the latter curing method.

The curing agents generally used include phenols and phenol-formaldehyde resins produced by condensation of a phenol with formaldehyde in the presence of base. Typical agents include 2,6-dihydroxymethyl-4-alkyl phenols and their polycyclic condensation polymers. Examples are given in U.S. Patent No. 2,701,895 (February 15, 1955, which is hereby incorporated by reference).

Curing occurs through the reaction of the methylol groups of the phenols or resin with the uncured rubber to form cross-linked structures. Mechanisms of such curing of butyl rubber have been proposed (see for example R.P. Lattimer et al, Rubber Chemistry 7 Technology, volume 62, pages 107-123, 1988 which is hereby incorporated by reference).

Cured butyl rubber has a number of uses, one of which is in tire-curing bladders. Tire-curing bladders are inflatable and have an annular toroidal form. The curing bladder is disposed within a raw tire casing as an aid in shaping a tire by applying internal heat and pressure to the tire casing in a moulding press in which the tire is vulcanized. For this purpose, the bladder is inflated with a fluid heating medium, usually steam, under pressure, which causes the bladder to expand and thereby forces the tire casing into close conformity with the vulcanizing mould. Upon completion of the vulcanization, the curing bladder is removed from the tire, and inserted in another raw tire for a repetition of the curing operation. The bladder is thus repeatedly used for a number of cycles.

Subjecting phenol-formaldehyde resin cured butyl rubber to elevated temperatures, such as those reached during the process of curing tires, e.g., above 160°C, results in hardening or ageing of the butyl rubber. As a result, the butyl rubber has a limited life in such applications.

### Summary of the Invention

In one aspect, the invention provides a formulation comprising uncured butyl rubber, a halogen-containing compound, and a polycyclic phenol-formaldehyde resin having dimethylene ether bridges and methylene bridges wherein the molar ratio of dimethylene ether bridges to methylene bridges is less than about 2.5:1 and the ratio of said polycyclic phenol-formaldehyde resin to butyl rubber is less than 1:10. Optionally, said formulation may also include a filler, a process oil, a lubricant, and other desired ingredients known to one skilled in the art.

In another aspect, the invention provides a process for preparing the formulation described above comprising admixing uncured butyl rubber, a halogen-containing compound, and the polycyclic phenol-formaldehyde resin, wherein the ratio of said polycyclic phenol-formaldehyde resin to butyl rubber is less than 1:10.

In another aspect, the invention provides a flexible vulcanizate made using the above formulation. Preferably, the vulcanizate is in the form of a tire-curing bladder. The vulcanizates of the invention display improved ageing characteristics, compared with vulcanizates previously used for this purpose. Formation of curing bladders is described, for example, in the above-mentioned U.S. Patent No. 2,701,895. A curing bladder is subjected to repeated applications of heat and pressure, as pressurized steam at a temperature of about 150°C or higher, often 160°C or higher, is injected into the bladder during the tire-forming process. The vulcanizate of the invention is suitable for this and similar applications, as its improved to ageing properties enable it to withstand these repeated applications better than other known vulcanizates. Commercial curing bladders currently available have a life of about 400 cycles, i.e., they can be used about 400 times before their properties have deteriorated such that they are discarded. Vulcanizates of the formulation of the present invention permit the life to be enhanced by at least about 10% or more, i.e., to about 440 or more, and in some instances the enhancement is about 30% or even 50% or more.

In a further aspect, the invention provides a process for making such vulcanizates comprising converting the formulation to any desired shape and size, and vulcanizing at elevated temperatures, preferably in the range of from 125 to 250°C, and more preferably at 150 to 200°C.

In a further aspect, the invention provides use of the formulation described above as a tire-curing bladder formulation.

### Brief Description of the Figures

Figure 1 is a graph showing the stress (MPa) versus hot air ageing time (hours) at 180°C of Formulations A in accordance with the invention and comparative Formulations B, with 1.5 molar % isoprene content, at various elongations.
Figure 2 is a graph showing the effect of hot air ageing on stress at 50% elongation for Formulation A at varying isoprene contents.

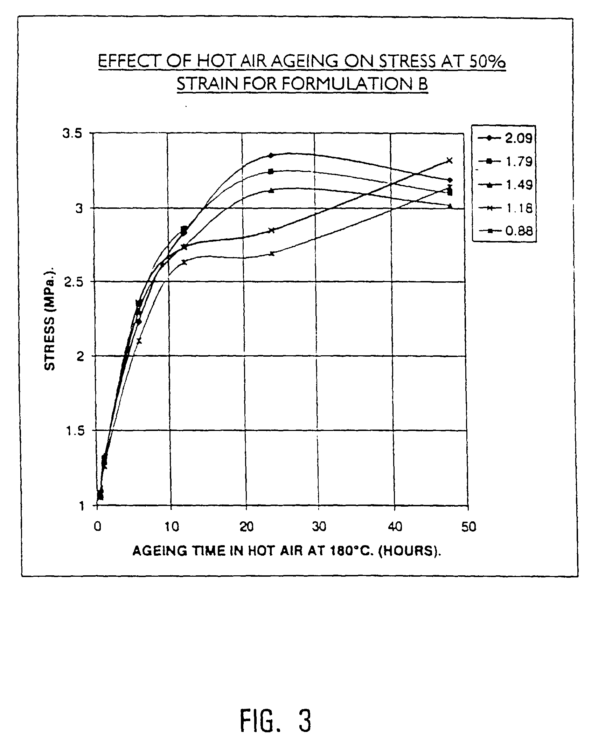

Figure 3 is a graph showing the effect of hot air ageing on stress at 50% elongation for Formulation B at varying isoprene contents.
Figure 4 is a graph showing the stress (MPa) versus strain (%) of Formulations A and B, with varying isoprene content, after curing for 30 minutes.
Figure 5 is a graph of torque versus curing time at 180°C of Formulations A and B at varying isoprene content.

### Detailed Description of the Invention

This invention is related to the unexpected discovery that resin-cured butyl rubbers with improved properties are obtained by curing the butyl rubbers with low amounts of phenol-formaldehyde resins with low levels of ether bridging. Such improved properties may include improved high-temperature ageing characteristics, faster cure rates, and better stress/strain properties. The invention provides a formulation comprising such resin, an uncured butyl rubber, a halogen-containing compound and, optionally, a filler, and a process oil.

Base-catalysed phenol-formaldehyde resins are made by condensing a phenol with formaldehyde in the presence of base. The reaction results in the formation of phenol-alcohols which may subsequently undergo condensation reactions to form polycyclic phenols. An example of a polycyclic phenol-formaldehyde resin is given below: 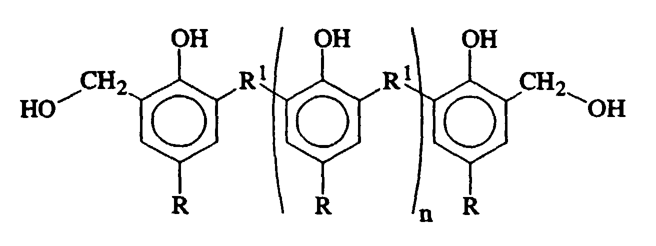 As shown, the phenol moieties are bridged by R'. These bridging moieties, R', may be the same or different and may be either methylene (-CH₂-) or dimethylene ether (-CH₂-O-CH₂). The integer n may have values from 0 to 10, preferably 0 to 5. It is preferred that the integer n has a value sufficiently high that the resin is a solid. The group R is an alkyl, cycloalkyl, cycloalkylalkyl, aryl or aralkyl group. It may contain up to about twelve carbon atoms. Preferred R groups are alkyl groups containing up to 8 carbon atoms, especially methyl, tert-butyl and tert-octyl groups; see U.S. Patent No. 2,701,895 for further examples.

The Applicant has noted that resin-cured butyl rubbers with improved properties are obtained by curing with phenol-formaldehyde resins with low levels of ether bridging. According to this invention, the molar ratio of dimethylene ether bridges to methylene bridges in the phenol-formaldehyde resin is less than about 2.5:1, preferably less than about 1.7:1, most preferably less than about 1:1. Examples of suitable phenol-formaldehyde resins which may be used in the invention include the resin available under the trade-mark HRJ-10518 (Schenectady International) which has a molar ratio of dimethylene ether bridges to methylene bridges of about 0.65:1. The amount of phenol-formaldehyde resin in the butyl rubber formulation should be about less than 9.5 parts, preferably less than about 9 parts, more preferably less than about 8 parts, to 95 parts by weight of uncured butyl rubber. The amount of phenol-formaldehyde resin should not be less than about 3 parts, preferably about 4 parts, more preferably about 5 parts, to 95 parts by weight of uncured butyl rubber. A preferred formulation uses 7 parts of phenol-formaldehyde resin per 95 parts of uncured butyl rubber.

A butyl rubber composition requires a small amount of a diene comonomer, usually isoprene, so that the composition can undergo cross-linking, or curing. Grades of butyl rubber can be distinguished by their isoprene content and Mooney viscosity (related to the molecular weight). Examples of uncured butyl rubber useful in this invention may have from about 0.5 mol% to about 10 mol% isoprene, and preferred butyl rubbers contain from about 0.5 to about 2.5 mol% isoprene, more preferably from about 0.9 to about 2.1 mol% of isoprene. Mention is made particularly of butyl rubber having about 1.4 to about 1.6 mol% isoprene. Some suitable butyl rubbers have a Mooney viscosity of about 25 to 70, preferably about 30 to about 63 (RPML 1 + 8 @ 125°C).

A halogen must be present in the formulation. Examples of halogen-containing compounds include organic compounds such as olefin-containing polymers having pendant chlorine atoms, such as polychloroprene, available under such trade-marks as Baypren (Bayer), Butachlor (Distagul) and Neoprene (Du Pont). The amount present in the formulation is preferably within the range of about 1 to about 10 parts, more preferably about 4 to about 6 parts, most preferably about 5 parts by weight to about 95 parts of uncured butyl rubber. Alternatively, chlorine-containing salts, for example stannous chloride, can be used as the halogen-containing compound. It is possible that the required halogen, e.g., chlorine or bromine, atom is provided as a component of one of the other essential ingredients of the formulation, rather than being provided by a separately added compound. For instance, it is possible to use a chlorinated or brominated butyl rubber, or a chlorinated or brominated polycyclic phenol-formaldehyde resin, rather than a separately added compound such as polychloroprene or stannous chloride. It is preferred, however that unhalogenated butyl rubber and unhalogenated phenol-formaldehyde resin are used and that the halogen is added in, say, polychloroprene or stannous chloride. In general, halogen-containing compounds are known to persons skilled in the art, who will know what halogen-containing activators can be used, and in what amounts, or can readily determine this by routine experimentation that does not involve the exercise of any inventive faculty.

Fillers may be added to the formulation. Examples of fillers include talc, calcium carbonate, clay, silica, titanium dioxide, and carbon black. Carbon black is preferred; more preferably, the carbon black ranges from N-770 to N-110; most preferably the carbon black is N-351, classified in accordance with ASTM D1765 (see Maurice Morton, "Rubber Technology" 3rd Edition, Chapman & Hall, New York, 1995, pages 69-70, hereby incorporated by reference). The amount of filler present in the formulation is preferably within the range of about 40 to about 80 parts, more preferably about 45 to about 60 parts, most preferably about 50 parts by weight to 95 parts of uncured butyl rubber.

The formulation of the invention may contain a process oil, and many suitable process oils are known to those skilled in the art. Examples of suitable process oils include castor oil and paraffinic oils.

Zinc oxide may be added as an activator, suitably in an amount of up to about 8 parts, preferably about 5 parts, per hundred parts of rubber. Stearic acid may also be added, to assist in solubilising the zinc oxide in the formulation.

The butyl rubber formulation described may be made by mixing the components of the butyl rubber formulation described above, and additionally any other desired optional ingredients such as accelerator, extender, lubricant, plasticizer, and the like, in any convenient manner used in the rubber industry, e.g. on a mill or in an internal mixer.

Vulcanizates can be made from the formulation of the invention by converting the formulation to any desired shape and size, and vulcanizing at elevated temperatures, usually in the range of from 125 to 250°C, and preferably at 150 to 200°C. The vulcanization may be carried out in any commonly known manner, as in a mould under pressure, or in an open container in an oven, for a suitable period of time, usually within the range of from 5 minutes to 24 hours, the higher temperatures being employed with the shorter time within the stated ranges. Examples of vulcanizates include tire-curing bladders, conveyor belting for hot-materials handling, and high-temperature service hoses.

In another aspect, the invention provides a formulation comprising uncured butyl rubber, a halogen-containing compound, and a polycyclic phenol-formaldehyde resin having dimethylene ether bridges and methylene bridges, wherein the molar ratio of dimethylene ether bridges to methylene bridges is less than about 2.5:1 and the ratio of uncured butyl rubber to said polycyclic phenol-formaldehyde resin is less than 10:1 and may be as little as 5:1.

### Examples

### Butyl Rubber Formulations

Two different types of butyl rubber formulations were prepared. Formulations A are in accordance with the invention, and contain a phenol-formaldehyde resin with a molar ratio of dimethylene ether bridges to methylene bridges of 0.65:1. Formulations B are comparative and contain a different phenol-formaldehyde resin with a molar ratio of dimethylene ether bridges to methylene bridges of 2.9:1. The isoprene content in the uncured butyl rubber component was varied to make up a series of five examples of each of Formulations A and B. The isoprene content was one of the following: 0.88, 1.18, 1.49, 1.79, and 2.09 mol % of isoprene. Amounts are given in parts by weight:

| | A | B |
|---|---|---|
| Uncured Butyl Rubber¹ | 95 | 95 |
| Polychloroprene² | 5 | 5 |
| Carbon Black N-351 | 50 | 50 |
| Castor Oil | 7.5 | 7.5 |
| Stearic Acid | 1.5 | 1.5 |
| Zinc Oxide | 5 | 5 |
| Phenol-Formaldehyde Resin³ | 7 | |
| Phenol-Formaldehyde Resin⁴ | | 7 |

| | | |
|---|---|---|
| ¹The uncured butyl rubber contains 0.88, 1.18, 1.49, 1.79 or 2.09 mol % isoprene unit. 0.88 mol % corresponds to exclusive use of PB100; whereas 2.09 mol % corresponds to exclusive use of PB402. Mixtures of PB402 and PB100 were used to make the other mol %'s. PB100 and PB402 are commercially available from Bayer Inc., and have Mooney's of 32.7 and 33.4, respectively (RPML 1 + 8@125°C). | | |
| ²Baypren 210 is commercially available from Bayer Inc. It is a polychloroprene with medium crystallinity. | | |
| ³Used was HRJ-10518, commercially available from Schenectady International and containing a molar ratio of dimethylene ether bridges to methylene bridges of 0.65:1. | | |
| ⁴Used was SP-1045, commercially available from Schenectady International and containing a molar ratio of dimethylene ether bridges to methylene bridges of 2.9:1. | | |

Tests were performed on Formulations A, the formulations of the invention, and compared with similar tests performed on Formulations B, formulations not of the invention. Subjecting the butyl rubber formulations to temperatures of 180°C first results in vulcanization or curing of the rubber. Longer times, such as 6 hours or more, result in ageing or hardening of the rubber. This may be the result of cross-linking, or some form of unwanted chemical alteration of the polymer network.

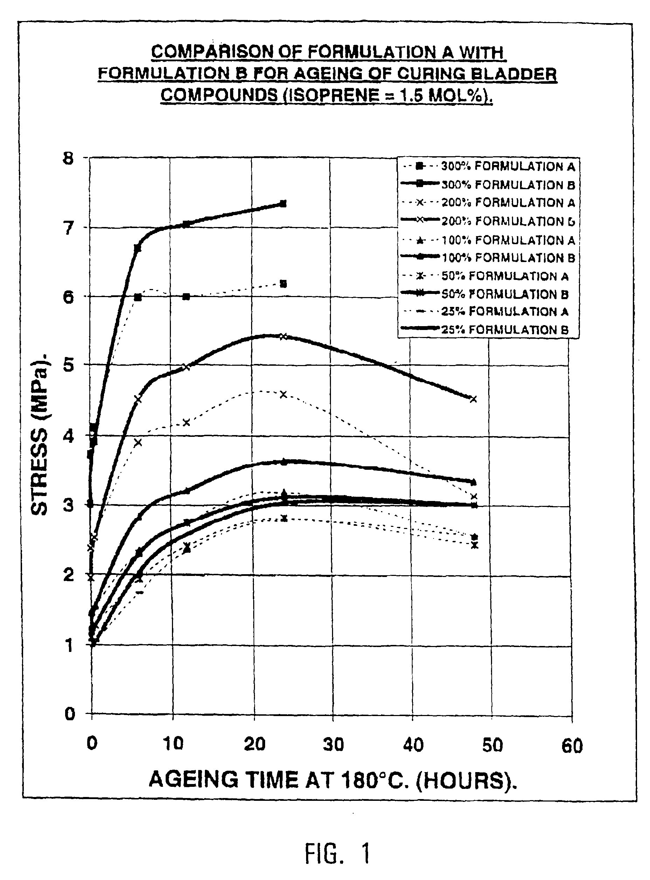

The effect of elevated temperature (180°C) on the stress at various strains for Formulations A and B with 1.5 molar % of isoprene is shown in Figure 1 and Table I. In every case, the aged (6 hours or more) modulus is much lower for Formulation A, the formulation of the invention.

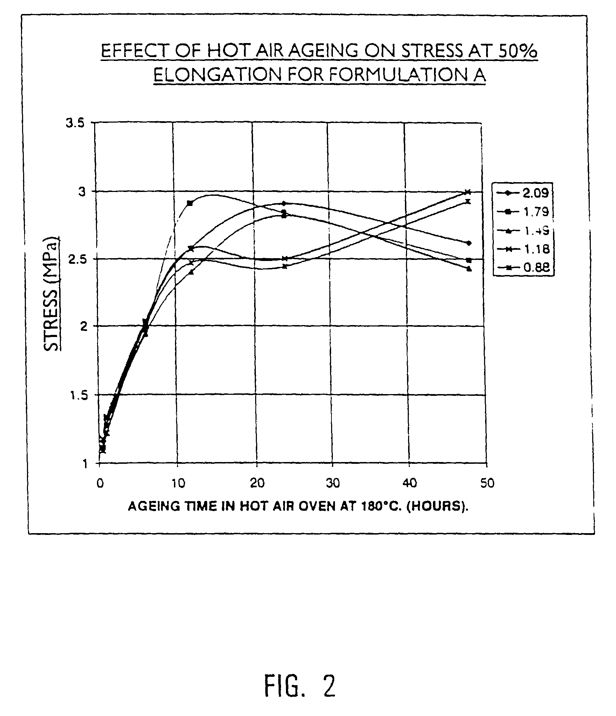

The effect of varying isoprene content of Formulations A and B on the stress as a function of ageing time is shown in Figures 2 (Formulations A) and 3 (Formulations B) and Tables II (Formulations A) and III (Formulations B). Comparison of the two Figures shows that in all cases Formulations A give lower stress after ageing (i.e. ageing being 6 hours or more at elevated temperature).

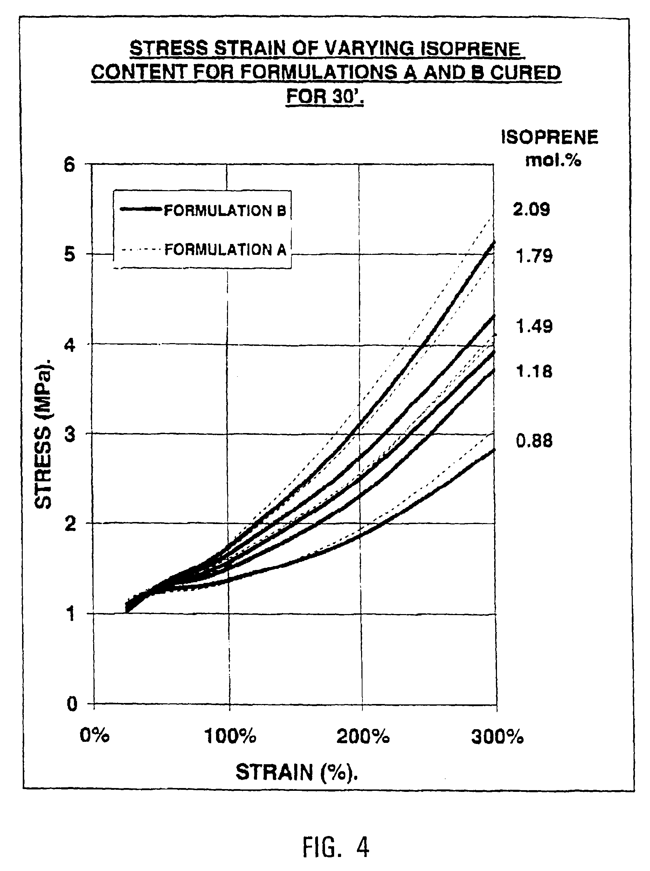

The stress after curing, but no ageing, was also examined. Stress-strain tests were performed on both types of Formulations, varying the isoprene content, after a 30 minute cure at 180°C. The results are given in Table IV and in Figure 4. In this case, the unaged stress is higher for Formulations A.

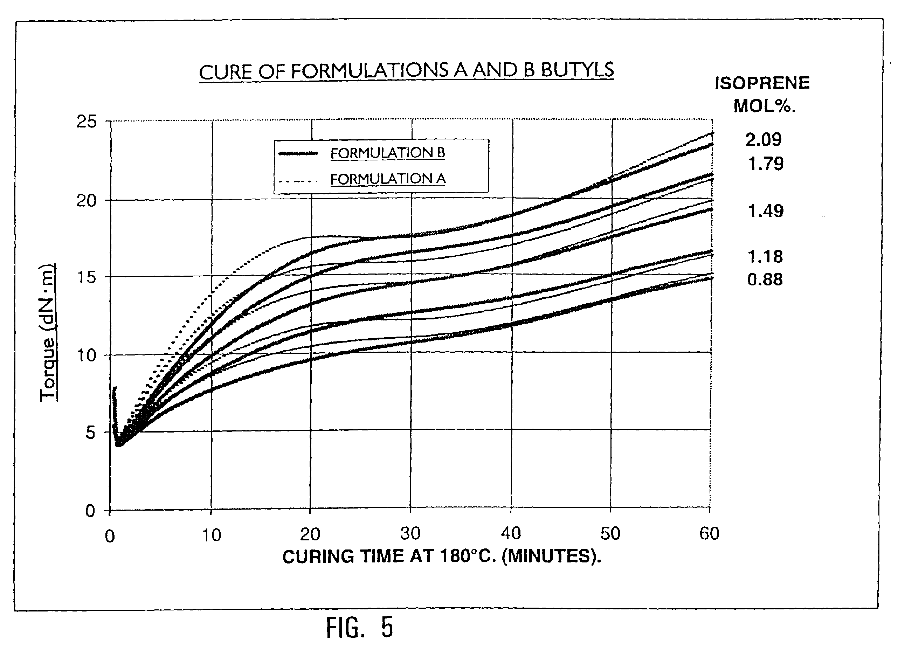

The initial cure rate of Formulations A and B is shown in Figure 5. As shown, especially over the first 20 minutes the initial cure rate is faster for Formulations A.

**TABLE I**

| **Comparison of Formulation A with Formulation B for Ageing of Bladder Compounds (Isoprene = 1.5 mol%)** | | | | | | |
|---|---|---|---|---|---|---|
| **STRESS STRAIN (Die C Dumbells, aged X hrs @ 180°C, tested @ 23°C** **STRESS (MPa) AFTER AGEING AT 180°C FOR 0.5 - 48 HOURS** | | | | | | |

| **STRESS (%)** | Unaged | 0.5 | 6 | 12 | 24 | 48 |
|---|---|---|---|---|---|---|
| 300% Formulation A | 3.74 | 4.12 | 5.99 | 6 | 6.2 | |
| 300% Formulation B | 3.02 | 3.92 | 6.7 | 7.05 | 7.34 | |
| 200% Formulation A | 2.37 | 2.54 | 3.91 | 4.18 | 4.58 | 3.15 |
| 200% Formulation B | 1.95 | 2.52 | 4.51 | 4.97 | 5.42 | 4.52 |
| 100% Formulation A | 1.47 | 1.56 | 2.33 | 2.76 | 3.2 | 2.56 |
| 100% Formulation B | 1.27 | 1.57 | 2.83 | 3.22 | 3.65 | 3.36 |
| 50% Formulation A | 1.2 | 1.29 | 1.94 | 2.4 | 2.82 | 2.43 |
| 50% Formulation B | 1.11 | 1.29 | 2.3 | 2.74 | 3.12 | 3.02 |
| 25% Formulation A | 1.07 | 1.06 | 1.75 | 2.33 | 2.8 | 2.56 |
| 25% Formulation B | 0.99 | 1.06 | 2.05 | 2.57 | 3.04 | 3.02 |

**TABLE II**

| **EFFECT OF HOT AIR AGEING ON STRESS AT 100% STRAIN FOR FORMULATION A, WITH VARYING ISOPRENE CONTENT** | | | | | | |
|---|---|---|---|---|---|---|
| **Formulation A: Stress @ 50% (MPa)** | | | | | | |
| **ISOPRENE CONTENT** | | 2.09 | 1.79 | 1.49 | 1.18 | 0.88 |
| **AGEING hrs** | Unaged | 1.16 | 1.11 | 1.2 | 1.18 | 1.09 |
| | 0.5 | 1.28 | 1.33 | 1.29 | 1.34 | 1.22 |
| | 6 | 2.03 | 1.97 | 1.94 | 2.03 | 2 |
| | 12 | 2.58 | 2.91 | 2.4 | 2.57 | 2.47 |
| | 24 | 2.91 | 2.84 | 2.82 | 2.5 | 2.44 |
| | 48 | 2.62 | 2.49 | 2.43 | 3 | 2.93 |

**TABLE III**

| **EFFECT OF HOT AIR AGEING ON STRESS AT 100% STRAIN FOR FORMULATION B, WITH VARYING ISOPRENE CONTENT** | | | | | | |
|---|---|---|---|---|---|---|
| **Formulation B: Stress @ 50% (MPa)** | | | | | | |
| **ISOPRENE CONTENT** | | 2.09 | 1.79 | 1.49 | 1.18 | 0.88 |
| **AGEING hrs** | Unaged | 1.1 | 1.11 | 1.11 | 1.07 | 1.05 |
| | 0.5 | 1.33 | 1.31 | 1.29 | 1.3 | 1.26 |
| | 6 | 2.23 | 2.35 | 2.3 | 2.36 | 2.1 |
| | 12 | 2.83 | 2.86 | 2.74 | 2.73 | 2.63 |
| | 24 | 3.35 | 3.24 | 3.12 | 2.85 | 2.69 |
| | 48 | 3.19 | 3.1 | 3.02 | 3.32 | 3.14 |

**Table IV**

| **UNAGED STRESS STRAIN AS A FUNCTION OF ISOPRENE CONTENT, 30′ CURE AT 180°C** | | | | | |
|---|---|---|---|---|---|
| Isoprene content (mol%) | 2.09 | 1.79 | 1.49 | 1.18 | 0.88 |

| **FORMULA A** | | | | | |
|---|---|---|---|---|---|
| Stress @ 300 (MPa) | 300% 4.61 | 3.96 | 3.74 | 3.01 | 2.41 |
| Stress @ 200 (MPa) | 200% 2.73 | 2.39 | 2.37 | 1.91 | 1.59 |
| Stress @ 100 (MPa) | 100% 1.51 | 1.39 | 1.47 | 1.3 | 1.18 |
| Stress @ 50 (MPa) | 50% 1.16 | 1.11 | 1.2 | 1.18 | 1.09 |
| Stress @ 25 (MPa) | 25% 0.94 | 0.93 | 1.07 | 0.94 | 0.94 |
| Ultimate Elongation Elong'n | 780 | 765 | 700 | 835 | 870 |
| Ultimate Tensile (M U.T.S.) | 12.41 | 11.7 | 10.4 | 11.2 | 10.53 |
| Hard. Shore A2 Inst. Shore A2 | 61 | 61 | 61 | 64 | 61 |

| **FORMULA B** | | | | | |
|---|---|---|---|---|---|
| Stress @ 300 (MPa) | 300% 3.71 | 3.51 | 3.02 | 2.48 | 1.93 |
| Stress @ 200 (MPa) | 200% 2.24 | 2.17 | 1.95 | 1.63 | 1.36 |
| Stress @ 100 (MPa) | 100% 1.35 | 1.34 | 1.27 | 1.21 | 1.11 |
| Stress @ 50 (MPa) | 50% 1.1 | 1.11 | 1.11 | 1.07 | 1.05 |
| Stress @ 25 (MPa) | 25% 0.86 | 0.94 | 0.99 | 0.91 | 0.9 |
| Ultimate Elongation Elong'n | 825 | 800 | 815 | 915 | 950 |
| Ultimate Tensile (M U.T.S.) | 11.66 | 11.09 | 9.54 | 10.22 | 9.13 |
| Hard. Shore A2 Inst. Shore A2 | 60 | 61 | 60 | 64 | 63 |

## Claims

1. A formulation comprising uncured butyl rubber, a halogen-containing compound, and a polycyclic phenol-formaldehyde resin having dimethylene ether bridges and methylene bridges, wherein the molar ratio of dimethylene ether bridges to methylene bridges is less than about 2.5:1 and the ratio of said polycyclic phenol-formaldehyde resin to uncured butyl rubber is less than 1:10.

2. A formulation according to claim 1 wherein the molar ratio of dimethylene ether bridges to methylene bridges is less than about 1.7:1.

3. A formulation according to claim 1 wherein the molar ratio of dimethylene ether bridges to methylene bridges is about 0.65:1.

4. A formulation according to claim 1 wherein the amount of phenol-formaldehyde resin is less than about 8 parts to 95 parts of uncured butyl rubber.

5. A formulation according to claim 1 wherein the halogen containing compound is polychloroprene.

6. A formulation according to claim 1 wherein the butyl rubber comprises about 0.5 to about 2.5 mol % isoprene and a Mooney viscosity of about 30 to about 63.

7. A formulation according to claim 1 which also comprises carbon black as filler, castor oil as process oil and zinc oxide as activator.

8. A process for preparing the formulation according to claim 1, comprising admixing uncured butyl rubber, a halogen-containing compound, and the polycyclic phenol-formaldehyde resin.

9. A vulcanizate obtained by vulcanizing a formulation according to claim 1.

10. A vulcanizate according to claim 4, in the form of a tire-curing bladder.

11. A formulation comprising uncured butyl rubber, a halogen-containing compound, and a polycyclic phenol-formaldehyde resin having dimethylene ether bridges and methylene bridges, wherein the molar ratio of dimethylene ether bridges to methylene bridges is less than about 2.5:1 and the ratio of uncured butyl rubber to said polycyclic phenol-formaldehyde resin is less than 10:1.
